# EUROPÄISCHE PATENTSCHRIFT

(11) **EP 2 762 723 B1**
(45) Veröffentlichungstag und Bekanntmachung des Hinweises auf die Patenterteilung: **05.06.2019**
(21) Anmeldenummer: 13000461.7
(22) Anmeldetag: 31.01.2013
(51) Int. Cl.: F03D 80/80

(54) **Windenergieanlage mit Turm und Kabeln im Turm**
Wind turbine comprising a tower and cables in the tower
Éolienne comprenant une tour et des câbles dans la tour

(43) Veröffentlichungstag der Anmeldung: 06.08.2014
(73) Patentinhaber: Nordex Energy GmbH, 22419 Hamburg (DE)
(72) Erfinder: Rickert, Tilo, 19065 Pinnov (DE); Mietann, Andreas, 18059 Rostock (DE); Lilie, Mario, 18147 Gehlsdorf (DE); Friedrich, Matthias, 18147 Gehlsdorf (DE); Sommerfeld, Heiko, 18055 Rostock (DE)
(74) Vertreter: Hauck Patentanwaltspartnerschaft mbB

(56) Entgegenhaltungen:
- EP-A1- 1 786 080
- CN-U- 202 034 719
- DE-A1-102010 008 639
- DE-A1-102011 076 941
- ES-A1- 2 373 495
- KR-A- 20120 021 629

## Beschreibung

Die vorliegende Erfindung betrifft eine Windenergieanlage mit einem Turm und mit einer drehbar auf dem Turm gelagerten Gondel.

Bei Windenergieanlagen mit horizontaler Rotationsachse des Rotors ist es erforderlich, dass der Rotor und mit diesem eine den Rotor und den Generator der Windenergieanlage tragende Gondel aktiv im Wind ausgerichtet werden können. Dieses Ausrichten im Wind wird als Windnachführung oder Azimutverstellung bezeichnet. Hierzu ist die Gondel mittels eines Azimutlagers um eine vertikale Achse drehbar auf dem Turm gelagert und es sind ein oder mehrere Azimutantriebe vorhanden.

Die von dem Generator der Windenergieanlage in der Gondel erzeugte elektrische Leistung wird häufig über Kabel aus der Gondel durch den Turm zum Boden geführt, wobei die Kabel drehfest einerseits an die Gondel, andererseits an den Turm bzw. das Innere der Turmwandung angebunden sind. Bei einer Verdrehung der Gondel tritt somit die Situation auf, dass ein Kabelende sich gemeinsam mit der Gondel dreht, während das andere Kabelende, das fest im Turm angebunden ist, sich nicht dreht. Hierdurch kommt es zu einer Torsion oder Verdrillung der Kabel.

Die an ihrem oberen Ende drehfest mit der Gondel verbundenen Kabel werden häufig zunächst in der Mitte des Turms herabhängend geführt. Dieser herabhängende Bereich hat eine Länge von beispielsweise etwa 10 Metern. Daran anschließend werden die Kabel aus der Mitte des Turms heraus zur Turmwandung geführt, wo sie mittels Kabelhalteeinrichtungen angebunden sind. In diesem Bereich hängen die Kabel zumeist etwas unterhalb der Anbindung an die Turmwandung; dieser Bereich wird als Kabeldurchhang oder Loop bezeichnet. Diese Anordnung ermöglicht es, daß die Gondel gegenüber dem Turm um bis zu beispielsweise 2,5

Umdrehungen (oder 900°) nach links oder rechts verdreht werden kann, bevor eine Begrenzung der Verdrehung bzw. ein Zurückdrehen in die Ausgangsposition erforderlich wird, um die Kabel wieder zu entdrillen. Durch das Verdrehen der Gondel und die daraus folgende Verdrillung der Kabel werden die Kabel im Kabeldurchhang angehoben und beim Zurückdrehen wieder abgesenkt.

Um eine Beschädigung der Kabel zu vermeiden, ist es wünschenswert, dass sich die auftretende Verdrillung möglichst gleichmäßig auf den herabhängenden Bereich verteilt und zugleich eine Verdrillung im Kabeldurchhang vermieden wird.

Aus DE 10 2011 076 940 A1 ist ein Turm für eine Windenergieanlage bekannt, bei dem stromführende Leistungskabel von elektrischen Komponenten aus dem Maschinenhaus zum Boden geführt sind. Um die Führung der Kabel zu verbessern und insbesondere deren Strombelastbarkeit sicherzustellen und einen Verschleiß an den Kabeln zu reduzieren, sind in dem Turm mindestens zwei Bündelungsvorrichtungen vorgesehen, welche dazu ausgebildet sind, einzelne, längs in dem Turm verlaufende Kabel zu einem festgelegten Kabelbündel zusammenzufassen. Die ringförmig mit Taschen zur Aufnahme der Kabel ausgebildeten Bündelungsvorrichtungen stellen dabei sicher, dass die Kabel jeweils einen ausreichenden Abstand zueinander besitzen und so keine Reduzierung der Strombelastbarkeit durch gegenseitige Induktion in den Kabeln auftreten kann. Der gebündelte Kabelstrang wird in einem ersten Abschnitt mittig in dem Turm der Windenergieanlage geführt. Unterhalb der am weitesten vom Turmkopf entfernt liegenden Bündelungsvorrichtung hängen die Kabel frei durch, um anschließend in einer an der Turmwand montierten Kabelhalteeinrichtung zu münden. Bei einer Verdrehung des Kabels aufgrund einer Drehung in der Gondel verdreht sich auch das herunterhängende Kabel und der durchhängende Teil der Kabel wird angehoben oder abgesenkt.

Aus DE 10 2011 076 941 A1 ist eine Windenergieanlage mit einer drehbar gelagerten Gondel bekannt, bei der Kabel aus der Gondel kommend mittig im Turm geführt werden. Führungseinrichtungen zur mindestens teilweisen Festlegung der Kabelbündel sind zwischen diesen und dem Turm angeordnet. Ein Beispiel für eine solche Kabelführungsvorrichtung umfasst einen Schwenkarm, der um eine horizontale Schwenkachse drehbar an der Turminnenwand angeordnet ist. Der Schwenkarm trägt an seinem freien Ende eine Bündelungsvorrichtung, die über eine Aufhängung um eine Drehachse drehbar an dem Schwenkarm befestigt ist. Bei einer Torsion der Kabel schwenkt der Schwenkarm der Führungsvorrichtung aus seiner horizontalen Stellung nach oben oder nach unten, um die tordierten Kabel gebündelt und beabstandet von der Wand zu halten.

Eine zweite, ebenfalls aus DE 10 2011 076 941 A1 bekannt gewordene Führungsvorrichtung sieht vor, dass ein schienengeführter Gleitschlitten in axialer Richtung verschiebbar gelagert ist und so eine Torsion der Kabel erfolgt.

Aus CN 202034719U ist eine Kabelfixierungsklammer bekannt, die zur Verwendung im Turm einer Windenergieanlage vorgesehen ist. Die Kabelfixierungsklammer weist eine Kabelhülse und einen Expansionsring auf, wobei mehrere Federschlitze an der Peripherie der Kabelhülse angeordnet sind. Die Kabelhülse und der Expansionsring sind festgezurrt durch drei Zugfedern, die eine gute Elastizität und eine gute Dämpfungswirkung bei geringem Gewicht besitzen.

Aus KR 10-2012-0021629 ist eine Windenergieanlage mit einem Turm bekannt, in dem ein Haupttransformator so aufgehängt ist, dass er im Zusammenwirken mit den Aufhängungen als Schwingungstilger zur Kontrolle von lateralen Schwingungen des Turms wirkt.

Aus WO 2010/108538 A1 ist eine Kabelführung in einem Turm einer Windenergieanlage bekannt, bei der zentral aufgehängte Abstandsplatten drehfest im Turm verspannt sind.

Aus DE 10 2010 008 639 A1 ist eine Befestigungskonstruktion für Turmeinbauten bekannt, die über Zugelemente aufgehängt sind.

Aus ES 2 373 495 A1 ist ein Turm für eine Windenergieanlage bekannt, bei dem der wandfest geführte Kabelabschnitt über zwei in Turmlängsrichtung laufende Spannseile gehalten ist, die mit Querriegeln zusammenwirken, durch die die Kabel verlaufen.

Der Erfindung liegt die Aufgabe zugrunde, eine Windenergieanlage bereitzustellen, die mit einfachen Mitteln eine zuverlässige und schonende Führung der Kabel im Inneren des Turms einer Windenergieanlage gestattet.

Erfindungsgemäß wird die Aufgabe durch eine Windenergieanlage mit einem Turm gemäß Anspruch 1 gelöst. Vorteilhafte Ausgestaltungen bilden den Gegenstand der Unteransprüche.

Die erfindungsgemäße Windenergieanlage weist einen Turm und eine drehbar auf dem Turm gelagerte Gondel sowie mehrere Kabel auf. Bei den Kabeln kann es sich um einadrige oder mehradrige Kabel handeln, auch können

Leistungskabel, Erdungskabel, Steuer- und Signalkabel sowie sonstige Kabel vorgesehen sein. Die Kabel hängen aus der Gondel kommend frei im Inneren des Turms und sind dort drehfest an die Turmwandung angebunden bzw. angeschlagen. Erfindungsgemäß sind die mehreren Kabel durch eine Kabelbündelungseinrichtung geführt, die über mindestens zwei Spanneinrichtungen in der Turmmitte gehalten wird. Die Spanneinrichtungen lassen jeweils Verdrehungen der Kabelbündelungseinrichtung nur in einem vorbestimmten Winkelbereich zu. Der vorbestimmte Winkelbereich ist bevorzugt deutlich kleiner als ein Viertelkreis und liegt bei wenigen Grad, beispielsweise etwa 10 bis 20 Grad. Der Vorteil des erfindungsgemäßen Systems besteht darin, dass durch die Verwendung von zwei oder mehr Spanneinrichtungen die Kabelbündelungseinrichtung sicher zur Turmmitte abgespannt werden kann. Zudem ist die Montage deutlich vereinfacht. Aufwendige Konstruktionen, wie beispielsweise ein schienengeführter Gleitkörper oder ein an der Turminnenseite befestigter Schwenkarm, können erfindungsgemäß entfallen.

Erfindungsgemäß wird oberhalb der Kabelbündelungseinrichtung ein erster Abschnitt der mehreren Kabel und unterhalb der Kabelbündelungseinrichtung ein zweiter Abschnitt der mehreren Kabel gebildet. Oberhalb und unterhalb beziehen sich auch nachfolgend stets auf die Turmlängsrichtung, wobei die Gondel oben auf dem Turm angeordnet ist. Der erste Abschnitt erstreckt sich über eine größere Länge als der zweite Abschnitt, beispielsweise etwa 10 Meter. Aufgrund der Drehung der Gondel auf dem Turm liegt die Drehachse der Gondel in der Turmmitte. In dem ersten Abschnitt hängen die mehreren Kabel frei in der Turmmitte und können so der Drehung der Gondel folgen und sich verdrillen. Durch die Verdrillung des Kabelbündels wird die Kabelbündelungseinrichtung verdreht. In dem zweiten Abschnitt sind die Kabel aus der Turmmitte heraus zur Turmwandung geführt, wo sie mittels Kabelhalteeinrichtungen angebunden sind. In dem zweiten Abschnitt hängen die

Kabel etwas unterhalb der Anbindung an die Turmwandung und bilden den Kabeldurchhang. Dadurch, dass die mindestens zwei Spanneinrichtungen eine Verdrehung der Kabelbündelungseinrichtung nur in einem kleinen Winkelbereich zulassen, wird vermieden, dass die Verdrillung der mehreren Kabel aus dem ersten Abschnitt sich auf den zweiten Abschnitt übertragen kann. Eine Verdrillung der mehreren Kabel in dem zweiten Abschnitt wird so vermieden, dadurch werden Leistungsverluste und ein vorzeitiger Verschleiß der Kabel im Kabeldurchhang vermieden.

In einer bevorzugten Ausgestaltung sind oberhalb der Kabelbündelungseinrichtung, in dem ersten Abschnitt, entlang den herabhängenden Kabeln eine oder mehrere Kabelbündelungseinrichtungen vorgesehen, durch die jeweils die Kabel geführt sind. Diese Kabelbündelungseinrichtungen sind jedoch nicht über Spanneinrichtungen abgespannt, sondern können sich mit den herabhängenden Kabeln verdrehen. Die durch die Kabelbündelungseinrichtungen geführten Kabel sind dadurch derart mit einem Abstand geführt, dass unerwünschte Induktion und die damit verbundenen Leistungsverluste sowie mechanische Beschädigungen vermieden werden. Innerhalb jeder Kabelbündelungseinrichtung werden die Kabel zusammengehalten, so dass sie nicht frei durch das Innere des Turms schwingen können. Ebenso wird durch die Kabelbündelungsrichtungen bewirkt, dass sich die Verdrillung der mehreren Kabel gleichmäßig auf den ersten Abschnitt oberhalb der abgespannten Kabelbündelungseinrichtung verteilt.

In einer bevorzugten Ausgestaltung sind die Spanneinrichtungen jeweils mit der Innenseite der Turmwandung verbunden. Die Anbindung an die Turmwandung kann beispielsweise über Schweißbuchsen erfolgen, in denen sich eventuell Ringschrauben zum Anschlagen der Spanneinrichtungen mittels Schäkeln befinden.

In einer bevorzugten Ausgestaltung sind mindestens drei Spanneinrichtungen vorgesehen, um die Kabelbündelungseinrichtung zu halten. Mittels drei oder mehr Spanneinrichtungen kann die Kabelbündelungseinrichtung sicher in ihrer Position und Lage gehalten werden, auch wenn während der Errichtung oder anderer Arbeiten im Turm kein Kabelbündel vorhanden ist.

Bevorzugt sind die Spanneinrichtungen im Wesentlichen gleichmäßig über den Umfang der Kabelbündelungseinrichtung verteilt. Die gleichmäßig über den Umfang der Kabelbündelungseinrichtung verteilt angeordneten Spanneinrichtungen halten die Kabelbündelungseinrichtung in der Turmmitte und verhindern deren seitliche Ausweichbewegung, selbst bei einer starken Torsion der Kabel.

In einer bevorzugten Weiterbildung sind die Spanneinrichtungen dazu eingerichtet, eine aus der Verdrillung der mehreren Kabel resultierende Hebe- und/oder Senkbewegung der Kabelbündelungseinrichtung zuzulassen. In einer vorgegebenen Neutralposition der Gondel hängen die mehreren Kabel im Turm gerade herunter. Die Kabelbündelungseinrichtung hängt in dieser Position am tiefsten, insbesondere tiefer als die Anbindung der Spanneinrichtungen an die Turmwandung. Bei einer Verdrehung der Gondel gegenüber dem Turm nach links oder rechts aus der Neutralposition heraus verdrillen sich die mehreren Kabel, was zu einer Verkürzung im ersten Abschnitt und einem Heben der Kabelbündelungseinrichtung führt. Entsprechend führt das Zurückdrehen der Gondel in Richtung der Neutralposition zu einem Senken der Kabelbündelungseinrichtung.

In einer zweckmäßigen Weiterbildung weisen die Spanneinrichtungen jeweils ein Spannseil, insbesondere ein Stahlseil, auf. Die Verwendung eines Spannseils in der Spanneinrichtung erlaubt einerseits eine einfache Montage und andererseits eine einfache Anpassung an unterschiedliche Turmdurchmesser. Jedes der Spannseile weist eine definierte Länge auf, so dass das gespannte Seil mindestens die Hebe- und/oder Senkbewegung der zugehörigen Kabelbündelungseinrichtung bei einer Verdrehung der Gondel um einen vorbestimmten Winkel in die eine oder in die andere Richtung zulässt.

Bevorzugt weisen die Spanneinrichtungen jeweils Mittel zur Anpassung der Länge der Spanneinrichtung, insbesondere ein Spannschloss auf. Auch elastische Mittel, beispielsweise Federmittel, können als Mittel zur Anpassung der Länge vorgesehen sein.

In einer bevorzugten Ausgestaltung ist eine an der Turmwandung angeordnete Kabelumlenkung vorgesehen, über die die aus der Turmmitte kommenden Kabel geführt sind. Mit Hilfe der Kabelumlenkung werden die aus der Turmmitte kommenden Kabel in den Bereich der Turmwandung geführt, wo sie mittels Kabelhalteeinrichtungen angebunden sind. Mit Hilfe der Kabelumlenkung wird einerseits ein Knicken der Kabel, andererseits eine Überlastung der Kabelhalteeinrichtungen aufgrund des Gewichtes der Kabel vermieden.

Ein bevorzugtes Ausführungsbeispiel wird nachfolgend erläutert. Es zeigen:
- Fig. 1: einen Turm einer Windenergieanlage in seinem oberen Bereich mit einem mittig geführten Kabelbündel und
- Fig. 2 a-c: eine schematische Ansicht eines gespannten Kabelführungssystems.

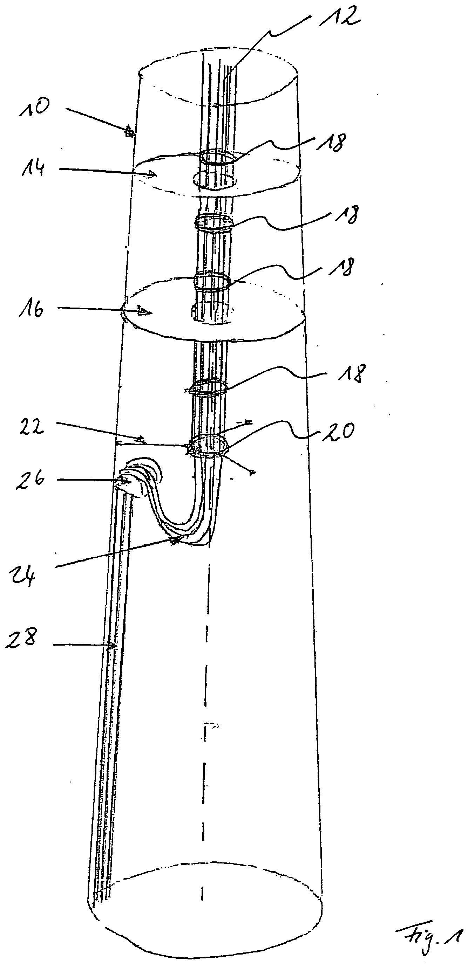

Fig. 1 zeigt eine Turmwandung 10 eines Turms für eine Windenergieanlage im Bereich unmittelbar unterhalb einer Gondel (nicht dargestellt). Der Turm setzt sich in der Darstellung nach unten fort. Mehrere Kabel 12 werden aus der drehbar gelagerten Gondel herunter mittig im Inneren des Turms geführt. In dem Turm befinden sich Turmplattformen 14, 16, die jeweils zentral Durchbrechungen besitzen, durch die die herabhängenden Kabel 12 hindurchgeführt werden. Die Kabel 12 werden über Kabelbündelungseinrichtungen 18, 20 zu einem Kabelbündel geordnet. Durch die Kabelbündelungseinrichtungen 18, 20 ist sichergestellt, dass die Kabel 12 einen ausreichenden Abstand untereinander besitzen und bei einer Torsion des Kabelbündels nicht beschädigt werden. Die am weitesten unten angeordnete Kabelbündelungseinrichtung 20 ist über drei Spanneinrichtungen 22 mit der Turmwandung 10 verspannt. Nachfolgend an die Kabelbündelungseinrichtung 20 hängt das Kabelbündel frei in einem Kabeldurchhang 24 durch. Von dem Kabeldurchhang 24 kommend laufen die Kabel 12 über eine Kabelumlenkung 26, wo sie mittels Kabelhalteeinrichtungen an die Turmwand 10 angebunden sind.

Bei einer Verdrehung der Gondel verdreht sich auch das Kabelbündel und wird bis zu der Kabelbündelungseinrichtung 20 tordiert. Die Kabelbündelungseinrichtung 20 ist durch die Spanneinrichtungen 22 hin zur Turmmitte abgespannt. Durch das Verdrillen des Kabelbündels wird auch die Kabelbündelungseinrichtung 20 verdreht, wobei dieses Verdrehen durch die Spanneinrichtungen 22 auf wenige Grad, beispielsweise 10 bis 20 Grad, begrenzt wird. Dadurch erfolgt keine Übertragung der Torsion auf den Kabeldurchhang 24 und die Kabel im Bereich des Kabeldurchhangs werden keinem unerwünschten mechanischen Verschleiß ausgesetzt. Die über die Länge des hängenden Abschnitts der Kabel 12 verteilten Kabelbündelungseinrichtungen 18 bewirken, dass die auftretende Verdrillung sich über die gesamte Länge des hängenden Abschnitts verteilt. Nach der Kabelumlenkung 26 sind die Kabel 28 entlang der Turmwand 10 zum Turmfuß geführt und es erfolgt keine Verdrehung der Kabel. Alternativ können die Kabel hier mit Stromschienen 28 verbunden sein, die entlang der Turmwand 10 zum Turmfuß geführt sind.

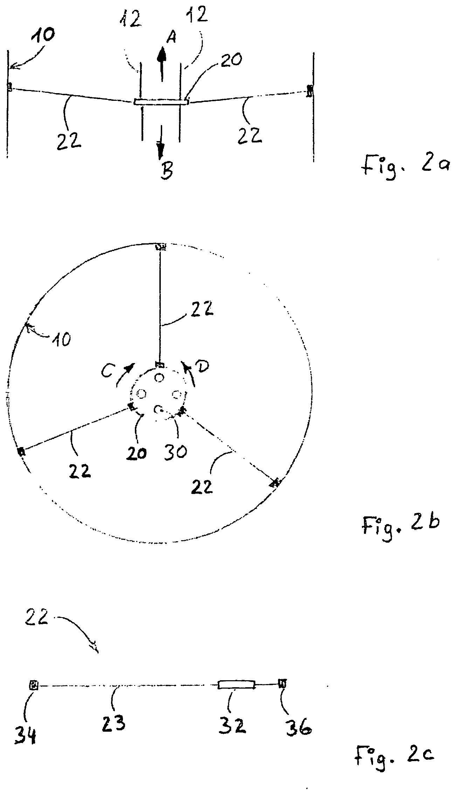

Bei einer Drehung der Kabel 12 wird die Kabelbündelungseinrichtung 20, abhängig von der Drehrichtung, angehoben oder abgesenkt. Die Zusammenhänge zeigen die Fign. 2a bis 2c in einer Prinzipskizze.

Fig. 2a zeigt in einer schematischen Ansicht von der Seite eine Kabelbündelungseinrichtung 20. Die Kabelbündelungseinrichtung 20 ist über Spanneinrichtungen 22 an der Turmwandung 10 abgespannt. Je nach Drehrichtung der Gondel erfolgt eine Torsion der Kabel 12 und daraus folgend ein Heben oder Senken der Kabel 12 und der Kabelbündelungseinrichtung 20, angedeutet durch die Pfeile A, B. Die Spanneinrichtungen 22 sind so bemessen, dass dieses Heben oder Senken ermöglicht wird.

Fig. 2b zeigt die Kabelbündelungseinrichtung 20 in einer Draufsicht. Die Kabelbündelungseinrichtung 20 weist Durchführungen 30 auf, durch die die Kabel geführt werden. Das Verdrehen der Kabelbündelungseinrichtung 20 wird durch die Pfeile C und D angedeutet.

Fig. 2c zeigt eine Spanneinrichtung 22 in der Ansicht von der Seite. Die Spanneinrichtung 22 besteht aus einem Spannseil 23, beispielsweise einem Stahlseil, und einem Spannschloss 32, über das die Länge der Spanneinrichtung 22 eingestellt werden kann. An den Enden 34, 36 sind Mittel vorgesehen, über die die Spanneinrichtung 22 einerseits an die Kabelbündelungseinrichtung 20, andererseits an die Turmwand 10 angebunden wird.

In dem erfindungsgemäßen Turm einer Windenergieanlage wird die Kabelbündelungseinrichtung 20 mit drei Spanneinrichtungen 22 und den dazugehörigen Beschlägen gleichmäßig im Umfang verteilt zur Turmmitte hin abgespannt. Die Länge der Spanneinrichtungen 22 kann über das jeweilige Spannschloss 32 eingestellt werden. Je nach Turmdurchmesser ist die Seillänge so gewählt, dass ein minimaler Durchhang von ca. 0,2 m bis 0,3 m zwischen der Kabelbündelungseinrichtung 20 und der Anbindung an die Turmwand 10 entsteht. Die Kabelbündelungseinrichtung ist so zu einem Höhenausgleich (A, B) und zu einem Rotationsausgleich (C, D) in der Lage und erlaubt eine kontrollierte Torsion der hängenden Kabel 12. Die Turmwandanbindung der Spanneinrichtungen 22 erfolgt bevorzugt über Schweißbuchsen, in denen sich eventuell Ringschrauben zum Anschlagen der Spannseile mittels Schäkel befinden. Die Anbindung zur Kabelbündelungseinrichtung 20 ist so gestaltet, dass ein handelsüblicher Schäkel oder direkt die Seilkausche angeschlagen werden kann.

Im Gegensatz zu anderen Führungssystemen ist die erfindungsgemäße Seilführung bei nahezu allen Kabelbündelungssystemen und Türmen anwendbar und zudem schnell nachrüstbar. Sie bietet große Flexibilität in Bezug auf den Turmdurchmesser und sie bedarf lediglich einer jährlichen Sichtprüfung. Das System ist im Höhen- und Rotationsausgleich sehr flexibel, wobei die Kraftableitung über die Spannseile erfolgt. Eine Torsion der Kabel im Bereich des Kabeldurchhangs wird damit wirksam vermieden und sowohl Leistungsverluste als auch Verschleiß der Leistungskabel sind hierdurch deutlich reduziert.

Die erfindungsgemäße Seilführung wurde hier am Beispiel eines Rohrturmes gezeigt. Selbstverständlich ist eine Verwendung bei anderen Arten von Türmen für Windenergieanlagen leicht möglich, beispielsweise können bei einem Fachwerkturm einfach die Eckstützen zur Anbindung der Spanneinrichtungen verwendet werden.

## Patentansprüche

1. Windenergieanlage mit einem Turm und mit einer drehbar auf dem Turm gelagerten Gondel und mehreren Kabeln (12), die aus der Gondel hängend im Inneren des Turms und durch eine Kabelbündelungseinrichtung (20) geführt an die Turmwandung (10) angebunden sind, wobei die Kabelbündelungseinrichtung (20) über mindestens zwei Spanneinrichtungen (22) derart gehalten ist, dass eine Verdrehung (C, D) der Kabelbündelungseinrichtung (20) zugelassen und auf einen vorbestimmten Winkelbereich begrenzt ist, wobei oberhalb der Kabelbündelungseinrichtung (20) ein erster Abschnitt gebildet wird, in dem die mehreren Kabel (12) frei hängen, und unterhalb der Kabelbündelungseinrichtung (20) ein zweiter Abschnitt (24) gebildet wird, in dem die mehreren Kabel (12) zur Turmwandung (10) geführt werden, und wobei die Kabelbündelungseinrichtung bei einer Verdrehung der Gondel durch die Kabel (12) verdreht wird.

2. Windenergieanlage nach Anspruch 1, **dadurch gekennzeichnet, dass** oberhalb der Kabelbündelungseinrichtung (20) weitere Kabelbündelungseinrichtungen (18) vorgesehen sind, durch die jeweils die Kabel (12) geführt sind.

3. Windenergieanlage nach Anspruch 1 oder 2, **dadurch gekennzeichnet, dass** die Spanneinrichtungen (22) mit der Innenseite der Turmwandung (10) verbunden sind.

4. Windenergieanlage nach einem der Ansprüche 1 bis 3, **dadurch gekennzeichnet, dass** mindestens drei Spanneinrichtungen (22) vorgesehen sind.

5. Windenergieanlage nach einem der Ansprüche 1 bis 4, **dadurch gekennzeichnet, dass** die Spanneinrichtungen (22) annähernd gleichmäßig über den Umfang der Kabelbündelungseinrichtung (20) verteilt sind.

6. Windenergieanlage nach einem der Ansprüche 1 bis 5, **dadurch gekennzeichnet, dass** die Spanneinrichtungen (22) eingerichtet sind, eine Hebe- und/oder Senkbewegung (A, B) der Kabelbündelungseinrichtung (20) zuzulassen.

7. Windenergieanlage nach einem der Ansprüche 1 bis 6, **dadurch gekennzeichnet, dass** die Spanneinrichtungen (22) jeweils ein Spannseil (23) aufweisen.

8. Windenergieanlage nach einem der Ansprüche 1 bis 7, **dadurch gekennzeichnet, dass** die Spanneinrichtungen (22) jeweils Mittel zur Anpassung der Länge der Spanneinrichtung (32) aufweisen.

9. Windenergieanlage nach einem der Ansprüche 1 bis 8, **dadurch gekennzeichnet, dass** die mehreren zur Turmwandung (10) geführten Kabel (12) über eine an der Turmwandung (10) angeordnete Kabelumlenkung (26) zur Turmwandung (10) geführt sind.

## Claims

1. Wind turbine comprising a tower and a nacelle mounted rotatably on the tower and a plurality of cables (12) which are suspended from the nacelle in the interior of the tower and are guided by a cable bundling device (20) and are connected to the tower wall (10), wherein the cable bundling device (20) is held via at least two tensioning devices (22) in such a way that twisting (C, D) of the cable bundling device (20) is permitted and limited to a predetermined angular range, wherein a first portion is formed above the cable bundling device (20), in which the plurality of cables (12) hang freely, and a second portion (24) is formed below the cable bundling device (20), in which the plurality of cables (12) are guided to the tower wall (10), and wherein the cable bundling device is rotated by the cables (12) upon rotation of the nacelle.

2. Wind turbine according to claim 1, **characterized in that** further cable bundling devices (18) are provided above the cable bundling device (20), through each of which the cables (12) pass.

3. Wind turbine according to claim 1 or 2, **characterized in that** the tensioning devices (22) are connected to the inside of the tower wall (10).

4. Wind turbine according to one of claims 1 to 3, **characterized in that** at least three tensioning devices (22) are provided.

5. Wind turbine according to one of claims 1 to 4, **characterized in that** the tensioning devices (22) are distributed approximately uniformly over the circumference of the cable bundling device (20).

6. Wind turbine according to one of claims 1 to 5, **characterized in that** the tensioning devices (22) are arranged to permit a lifting and/or lowering movement (A, B) of the cable bundling device (20).

7. Wind turbine according to one of claims 1 to 6, **characterized in that** the tensioning devices (22) each comprise a tensioning cable (23).

8. Wind turbine according to one of claims 1 to 7, **characterized in that** the tensioning devices (22) each have means for adapting the length of the tensioning device (32).

9. Wind turbine according to one of claims 1 to 8, **characterized in that** the plurality of cables (12) guided to the tower wall (10) pass to the tower wall (10) via a cable deflector (26) arranged on the tower wall (10).

## Revendications

1. Eolienne comportant une tour et une nacelle montée rotative sur la tour et plusieurs câbles (12) suspendus de la nacelle à l'intérieur de la tour et reliés à la paroi de la tour (10), guidés par un dispositif de faisceau de câbles (20), le dispositif de faisceau de câbles (20) étant maintenu par au moins deux dispositifs de tension (22), de manière à permettre et limiter la torsion (C, D) du dispositif de faisceau de câbles (20) à une distance angulaire prédéterminée, une première section est formée au-dessus du dispositif de faisceau de câbles (20), dans laquelle la pluralité de câbles (12) pendent librement, et une deuxième section (24) est formée au-dessous du dispositif de faisceau de câbles (20), dans laquelle la pluralité de câbles (12) sont guidés vers la paroi de la tour (10), et le dispositif de faisceau de câbles étant mis en rotation par les câbles (12) lorsque la nacelle tourne.

2. Eolienne selon la revendication 1, **caractérisée en ce que** d'autres dispositifs de faisceau de câbles (18) sont prévus au-dessus du dispositif de faisceau de câbles (20), à travers chacun desquels les câbles (12) sont guidés.

3. Eolienne selon la revendication 1 ou 2, **caractérisée en ce que** les dispositifs de tension (22) sont reliés à l'intérieur de la paroi de la tour (10).

4. Eolienne selon l'une des revendications 1 à 3, **caractérisée en ce qu'**au moins trois dispositifs de tension (22) sont prévus.

5. Eolienne selon l'une des revendications 1 à 4, **caractérisée en ce que** les dispositifs de tension (22) sont répartis approximativement uniformément sur la périphérie du dispositif de faisceau de câbles (20).

6. Eolienne selon l'une des revendications 1 à 5, **caractérisée en ce que** les dispositifs de tension (22) sont agencés de manière à permettre un mouvement de levage et/ou de descente (A, B) du dispositif de faisceau de câbles (20).

7. Eolienne selon l'une des revendications 1 à 6, **caractérisée en ce que** les dispositifs de tension (22) comportent chacun un câble de tension (23).

8. Eolienne selon l'une des revendications 1 à 7, **caractérisée en ce que** les dispositifs de tension (22) présentent chacun des moyens pour adapter la longueur du dispositif de tension (32).

9. Eolienne selon l'une des revendications 1 à 8, **caractérisée en ce que** la pluralité de câbles (12) guidés vers la paroi de la tour (10) sont conduits vers la paroi de la tour (10) via un déflecteur de câble (26) disposé sur la paroi de la tour (10).
